# EUROPÄISCHE PATENTSCHRIFT

(11) **EP 1 108 154 B1**
(45) Veröffentlichungstag und Bekanntmachung des Hinweises auf die Patenterteilung: **21.07.2004**
(21) Anmeldenummer: 99944438.3
(22) Anmeldetag: 19.08.1999
(51) Int. Cl.: F16D 65/12

(54) **RAD- UND/ODER BREMSSCHEIBENNABE SOWIE BREMSSCHEIBE**
WHEEL AND/OR BRAKE DISK HUB AND BRAKE DISK
MOYEU DE ROUE ET/OU DE DISQUE DE FREINAGE, ET DISQUE DE FREINAGE

(30) Priorität: 02.09.1998 DE 19839763
(43) Veröffentlichungstag der Anmeldung: 20.06.2001
(73) Patentinhaber: KNORR-BREMSE Systeme für Nutzfahrzeuge GmbH, 80809 München (DE)
(72) Erfinder: BAUMGARTNER, Hans, D-85368 Moosburg (DE); PAHLE, Wolfgang, D-74080 Heilbronn (DE)
(86) Internationale Anmeldenummer: PCT/EP1999/006070
(87) Internationale Veröffentlichungsnummer: WO 2000/014424

(56) Entgegenhaltungen:
- DE-A- 19 726 674
- DE-C- 19 544 559
- US-A- 5 360 087

## Beschreibung

Die Erfindung betrifft eine Bremsscheibenanordnung mit einer Rad- und/oder Bremsscheibennabe nach dem Oberbegriff des Anspruchs 1.

Eine Rad- und/oder Bremsscheibennabe mit den Merkmalen a) bis d) des Oberbegriffs des Anspruches 1 ist aus der DE 195 44 559 bekannt. Zur Verbindung der Bremsscheibe mit der Nabe sind bei dieser Bremsscheibe Zwischenelemente zur Drehmoment- und Kraftübertragung von den Nocken der Nabe auf die Abstützelemente der Scheibe vorgesehen, welche zum Beispiel durch Bolzen an den Nocken der Nabe befestigbar sind.

Dabei greifen einerseits die Nocken der Nabe in die Zwischenelemente und andererseits die Zwischenelemente in die Abstützelemente ein, so dass in beiden Drehrichtungen eine sichere Drehmomentübertragung von der Bremsscheibe auf die Nabe gewährleistet ist.

Nachteilig an diesem Stand der Technik ist die rostanfällige Schraubenverbindung, die möglichst vermieden werden soll.

Eine derartige Rad- und/oder Bremsscheibennabe für eine Bremsscheibe für Nutzfahrzeuge ist auch aus der DE-A-197 26 674 bekannt.

Aus der DE-A-197 26 674 als gattungsgemäßen Stand der Technik ist es ferner bekannt, die axiale Sicherung durch Ringe zu realisieren, die in Nuten der Nabe eingreifen, wobei die Ringe auch einstückig mit der Nabe ausgebildet sein können.

Ausgehend von diesem Stand der Technik ist die Aufgabe der Erfindung, neben einer weiter vereinfachten Montage auch eine besonders gute Belüftung der Bremsscheibe zu gewährleisten.

Die Erfindung erreicht dieses Ziel durch den Gegenstand des Anspruchs 1.

Die Erfindung realisiert eine Rad- und/oder Bremsscheibennabe, bei der die Bremsscheibe äußerst leicht montier- und/oder demontierbar ist, da keine Schraubenverbindungen vorgesehen sind.

Auch nach längerem Betrieb unter hoher Belastung ist es noch leicht möglich, die Bremsscheibe von der Radnabe zu demontieren. Darüber hinaus können die axialen Befestigungsmittel "Bund am Nocken" und "abgestufter Bremsscheibenumfang" bei der Herstellung der Nabe und der Bremsscheibe ausgeformt werden, so dass separate Befestigungsmittel zumindest für eine der beiden axialen Richtungen entfallen. Daher ist der wenigstens eine Bund einstückig an die axialen Endbereiche der Nocken angeformt.

Da die Luftkanäle der Nocken der Nabe axial von den axialen Außenseiten der Nocken in einen Luftspalt zwischen den Reibringen der Bremsscheibe münden, wird gegenüber dem gattungsgemäßen Stand der Technik die Kühlung der Bremsscheibe verbessert, da eine erhöhte Luftzufuhr aus dem Nabeninneren in den Luftspalt der innenbelüfteten Bremsscheibe realisiert wird.

Weitere vorteilhafte Varianten der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
- Fig. 1: eine Explosionsansicht einer erfindungsgemäßen Bremsscheiben/Nabenverbindung;
- Fig. 2a: eine Draufsicht auf das Ausführungsbeispiel der Erfindung nach Fig. 1 im montierten Zustand;
- Fig. 2b: eine Schnittansicht längs der Linie A-A in Fig. 2a;
- Fig. 2c: eine Rückansicht des Ausführungsbeispiels der Fig. 2a;
- Fig. 3a: eine Draufsicht auf ein weiteres Ausführungsbeispiel der Erfindung;
- Fig. 3b: eine Schnittansicht durch das Ausführungsbeispiel der Fig. 3a.

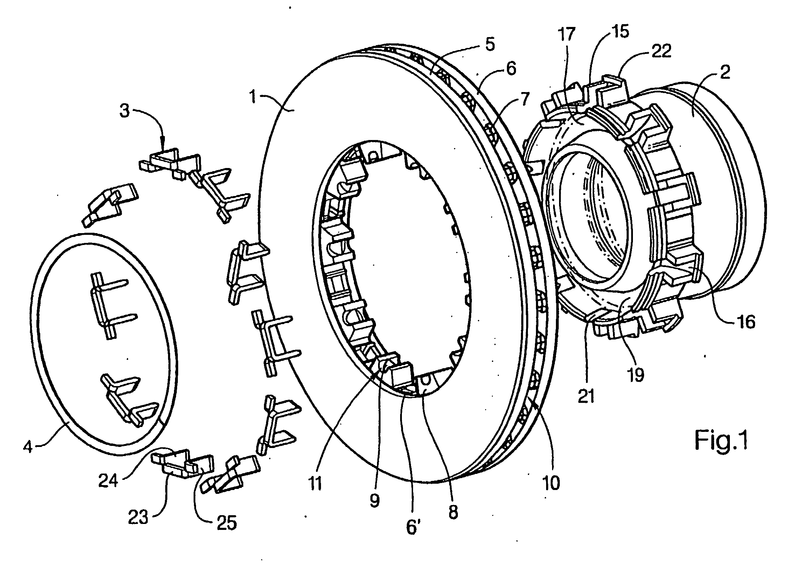

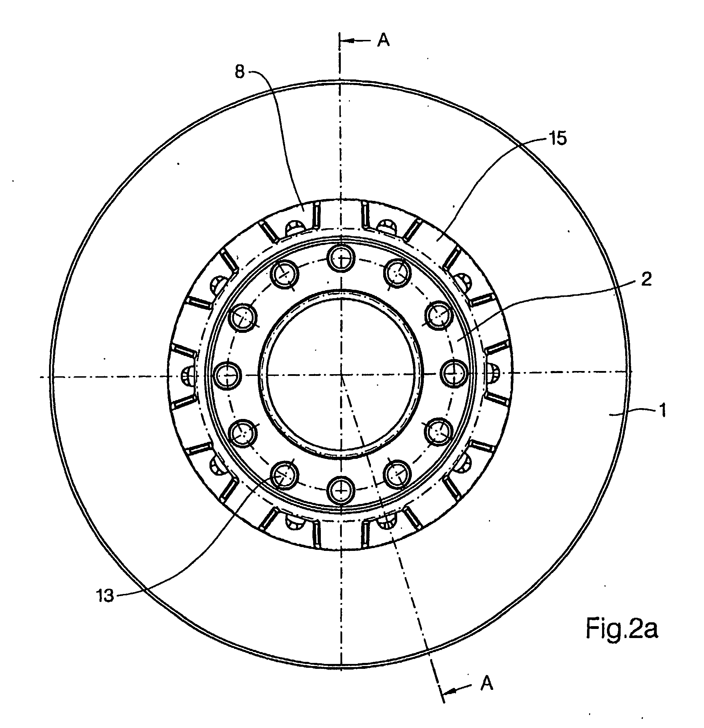

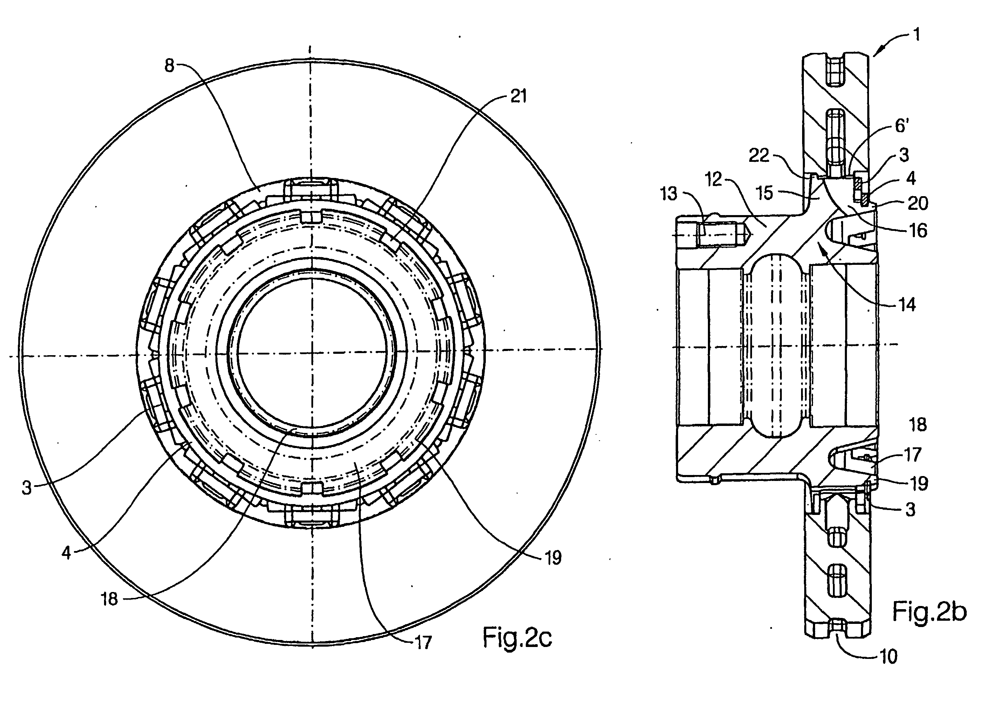

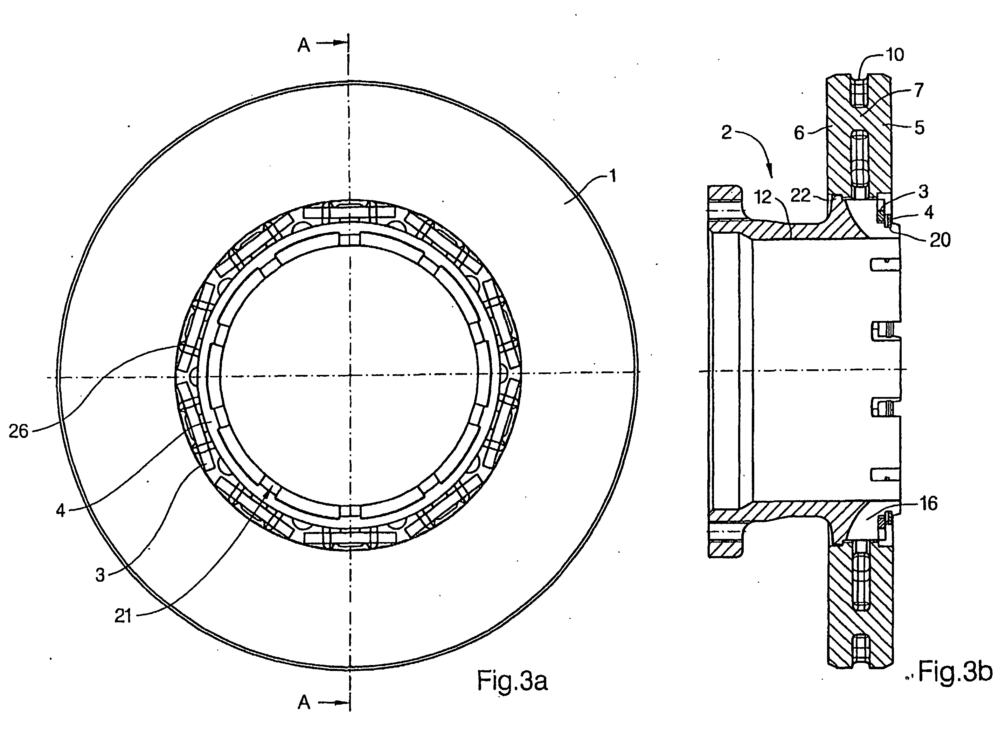

Fig. 1 und 2 zeigen eine Scheiben-/Nabenverbindung mit einer Bremsscheibe 1, einer Radnabe 2, einer Vielzahl von Zwischenelementen 3 und einen Sicherungsring 4. Fig. 3 unterscheidet sich hiervon im wesentlichen dadurch, dass die Radnabe 2 nicht einstückig mit bzw. nicht gleichzeitig auch als Scheibennabe ausgebildet ist, sondern zum Aufschieben auf eine separate hohlzylindrische Radnabe (in Fig. 3 nicht dargestellt) dient, was bei verschiedenen Radnabenausführungen fertigungstechnisch vorteilhaft sein kann.

Die insbesondere für schwere Nutzfahrzeuge mit pneumatischen Scheibenbremsen geeignete, innenbelüftete Bremsscheibe der Fig. 1 weist zwei Reibringe 5, 6 auf, die über Stege 7 miteinander verbunden sind. An den Innenumfang der Bremsscheibe 1 sind Abstützelemente 8 angeformt, welche im wesentlichen trapezförmig vom Innenumfang der Reibringe 5, 6 nach innen vorstehen und zur Zufuhr von Kühlluft in das innere der Bremsscheibe 1 von sich im wesentlich radial durch die Abstützelemente 8 hindurch erstreckenden Öffnungen 9 durchsetzt sind, welche die Zuleitung von Kühlluft in den Luftspalt 10 zwischen den beiden Reibringen 5, 6 erlauben und die zur Mitte der Bremsscheibe hin in axialen Ausnehmungen 11 der Abstützelemente 8 enden, so daß während der Fahrt eine Kühlluftzufuhr durch die Abstützelemente 8 hindurch in den Luftspalt 10 zwischen den Reibringen 5,6 möglich ist. Zwischen den Abstützelementen 8 sind die Reibringe derart axial abgestuft, daß am Reibring 6 eine Art Absatz 6' zur Anlage an einem axialen Sicherungselement (s.u.) der Nabe 2 entsteht.

Die Radnabe 2 der Fig. 1 und 2 besteht aus einem topfartigen, hohlzylindrischen Abschnitt 12, der an einem seiner axialen Enden mit Innengewinde versehene Bohrungen 13 für (hier nicht abgebildete) Schraubbolzen aufweist. An das von den Bohrungen 13 abgewandte axiale Ende des hohlzylindrischen Abschnittes 12 schließt sich ein weiterer axialer, hohlzylindrischer Abschnitt 14 an, an dessen Außenumgang radial nach außen vorstehende Nocken 15 verteilt sind.

Die radial nach außen vorstehenden Nocken 15 sind in Draufsicht auf den Außenumfang der Scheibennabe 2 U-förmig, wobei zwischen den Schenkeln des U ein Luftkanal 16 ausgebildet ist, welcher von der radialen Außenseite der Nocken 15 geneigt zur Radialen der Nabe 2 verläuft, wobei sich der Grundschenkel des U zum Nabeninneren hin verbreitert. Der Luftkanal 16 endet in einer umlaufenden Ausnehmung 17 an dem der Bremsscheibe 1 zugewandten axialen Ende der Nabe 2. Auf diese Weise ist eine Luftzufuhr von der axialen Stirnseite der Nabe 2 durch die Nocken 15 hindurch bis in den Luftspalt 10 der Bremsscheibe realisierbar (siehe Fig. 2).

Die Ausnehmung 17 an der Stirnseite der Nabe 2 wird axial nach innen und nach außen hin jeweils von einem umlaufenden Bund 18 und 19 begrenzt, von denen der äußere Bund 19 an seinem Außenumfang mit einer umlaufenden Ringnut 20 versehen ist. Jeweils im Bereich der Nocken 15 bzw. - genauer betrachtet - der Luftkanäle 16 ist der umlaufende Bund entsprechend zur Luftkanalbreite mit Einschnitten 21 versehen, welche dadurch entstehen, daß sowohl die Nocken 15 als auch die Luftkanäle 16 einstückig aus dem Material der Nabe 2 geformt sind.

Die klammerartigen Zwischenelemente 9 weisen eine U-Form bzw. einen Grundschenkel 23 und zwei dazu senkrecht ausgerichtete Längsschenkel 24, 25 auf, wobei der Grundschenkel 23 des U in der Mitte derart geschnitten und umgeformt ist, daß ein erster Teilbereich 23a des Grundschenkels 23 die zwei Längsschenkel 24, 25 des U miteinander verbindet und daß zwei weitere Teilbereiche 23b,c vom ersten Teilbereich um 180° nach außen vorstehen.

Wie ferner in Fig. 1 und 2b besonders gut zu erkennen, sind die Nocken 15 der Nabe 2 jeweils mit einem radial nach außen vorstehenden Bund 22 versehen, welcher die Grundseite der U-förmigen Nocken teilweise radial nach außen verlängert. Der Sinn der Bünde 22 als axiale Sicherung der Bremsscheibe 1 auf der Nabe 2 erschließt sich beim Betrachten der Fig. 2b, die einen Schnitt länges der Linie A-A aus Fig. 2a zeigt, also einen Schnitt, der im oberen Bereich der Fig. 2b durch einen Nocken 15 und im unteren Bereich dieser Figur durch ein Abstützelement 8 gelegt ist.

Wie aus dem Zusammenspiel der Fig. 1 und 2a-c zu erkennen, ist die Bremsscheibe 1 auf die Bremsscheibennabe 2 (auch Bremsscheibenträger genannt) axial aufschiebbar, wobei die Nuten 15 und die Abstützelemente 8 im Umfangsrichtung ineinander greifen. Die zwischen den Nocken 15 und den Abstützelementen 8 verbleibenden Zwischenraume 26 ermöglichen das seitliche Aufschieben der Zwischenelemente 9 über die Abstützelemente 8 und damit eine sichere Drehmomentübertragung von den Abstützelementen 8 über die Zwischenelemente 3 auf die Nocken 15 der Nabe.

Nach dem Aufschieben der Bremsscheibe 1 auf die Nocken 15 der Nabe 2 und nach dem Einsetzen der Zwischenelemente 3 wird der Sicherungsnng 4 in die Ringnut 20 eingelegt, aus der er axial nach außen vorsteht. In einer axialen Richtungn legen damit die Bünde 22, welche an Innenansätzen 27 am Innenumfang der Scheibe anliegen, die Bremsscheibe fest. In der anderen axialen Richtung wird die Bremsscheibe 1 vom Sicherungsring 4 fixiert. Ein besonderer Vorteil dieser Art der axialen Sicherung ist darin zu sehen, daß keinerlei Schraubbolzen zum Festlegen der Bremsscheibe auf der Nabe erforderlich sind, welche ggf. nach längerem Betrieb nur noch schwierig bzw. gar nicht mehr gelöst werden können.

### Bezugszeichenliste

- Bremsscheibe: 1
- Scheibennabe: 2
- Zwischenelemente: 3
- Sicherungsring: 4
- Reibringe: 5, 6
- Stege: 7
- Abstützelemente: 8
- Öffnungen: 9
- Luftspalt: 10
- Ausnehmungen: 11
- hohlzylindrischer Abschnitt: 12
- Bohrungen: 13
- hohlzylindrischer Abschnitt: 14
- Nocken: 15
- Luftkanal: 16
- Ausnehmung: 17
- Bund: 18
- Bund: 19
- Ringnut: 20
- Einschnitte: 21
- Bund: 22
- Grundschenkel: 23
- Längsschenkel: 24, 25
- Zwischenraume: 26
- Innenansatze: 27

## Patentansprüche

1. Bremsscheibenanordnung mit einer Rad-und/oder Bremsscheibennabe (2) zur Aufnahme einer ein- oder mehrteiligen, insbesondere gebrochenen, Bremsscheibe (19) mit, vorzugsweise über Stege (7), verbundenen Reibungen (5,6), wobei folgende Scheiben/Nabenverbindung zur Verbindung der Bremsscheibe (1) mit der Nabe (2) vorgesehen ist:
a) die Bremsscheibe (1) weist am inneren Umfangsbereich Abstützelemente (8) auf,
b) die Nabe (2) ist am äußeren Umfang mit Nocken (15) versehen,
c) radial zwischen der Nabe (2) und der Bremsscheibe (1) sind in Umfangsrichtung verteilt angeordnete, Zwischenelemente (3) vorgesehen,
d) die Zwischenelemente (3) sind über die Nocken (15) oder Abstützelemente (8) gesetzt, daß die Längsabschnitte in sich zwischen Nocken (15) und Abstützelemente (8) in Umfangsrichtung erstreckende Zwischenräume (26) ragen und damit eine Übertragung des Bremsmomentes von der Bremsscheibe (1) auf die Nabe (2) gewährleisten,
e) wobei wenigstens einer der Nocken (15) der Nabe (2) einen radial nach außen vorstehenden Bund (22) aufweist, welcher die auf die Nabe (2) gesetzte Bremsscheibe (1) zu einer Seite hin axial sichert, wobei der wenigstens eine Bund (22) einstükig an die axialen Endbereiche der Nocken (15) angeformt ist,
**dadurch gekennzeichnet, daß**
f) die Bremsscheibe am Innenumfang axial derart abgestuft ist, daß ein Absatz (6') zur Anlage am Bund (22) entsteht,
g) und die Nocken (15) der Nabe mit Luftkanälen (16) versehen sind, welche axial von den axialen Außenseiten der Nocken (15) ausgehend in einen Luftspalt (10) der Bremsscheibe (1) münden.

2. Bremsscheibenanordnung nach Anspruch 1, **dadurch gekennzeichnet, dass** die axiale Fixierung der Bremsscheibe zu der dem Bund (22) gegenüberliegenden Seite der Bremsscheibe hin durch ein Sicherungselement (3) erfolgt, welches in eine Nut (20) der Nabe (2) einsetzbar ist.

3. Bremsscheibenanordnung nach Anspruch 2, **dadurch gekennzeichnet, dass** das Sicherungselement (3) ein in die Nut (20) einsetzbarer offener Ring ist, der radial aus der Nut (20) nach außen vorsteht.

4. Bremsscheibenanordnung nach einem der vorstehenden Ansprüche, **dadurch gekennzeichnet, dass** die Zwischenelemente (3) klammenartig und im wesentlichen U-förmig ausgebildet sind

5. Bremsscheibenanordnung nach Anspruch 4, **dadurch gekennzeichnet, dass** die Zwischnelemente einen Grundschenkel (23) sowie zwei dazu senkrechte Längsschenkel (24, 25) aufweisen, der in mehrere Teile unterteilt ist, wobei ein erster Teil des Grundschenkels (23) die zwei Längsschenkel (24, 25) des U miteinander verbindet, wobei zwei weitere Teile relativ zum ersten Teilbereich um 180° nach außen abgebogen sind.

6. Bremsscheibenanordnung nach einem der vorhergehenden Ansprüche, **dadurch gekennzeichnet, dass** die Luftkanäle (16) als geneigt zur Bremsscheibenebene verlaufende Ausnehmungen ausgebildet sind, so dass die Nocken (15) am Außenumfang eine Art "U" ausbilden, dessen Grundseite sich radial nach innen hin vergrößert.

7. Bremsscheibenanordnung nach einem der vorstehenden Ansprüche, **dadurch gekennzeichnet, daß** die Zwischenelemente U-förmig ausgebildet sind.

## Claims

1. Brake disc unit including a wheel and/or brake disc hub for accommodating a one-part or multi-part, preferably non-continuous, brake disc (19), including friction rings (5, 6) preferably connected via cross-bars (7), wherein the following disc/hub connection is provided for connecting said brake disc (1) to said hub (2):
(a) said brake disc (1) presents supporting elements (8) on its inner peripheral portion,
(b) said hub (2) is provided with cams (15) on its outer periphery,
(c) intermediate elements (3) are provided radially between said hub (2) and said brake disc (1) and distributed in the peripheral direction,
(d) said intermediate elements (3) are placed over said cams (15) or supporting elements (8) in such a way that the longitudinal sections project into spaces (26) extending between said cams (15) and said supporting elements (8) in the peripheral direction so as to ensure a transmission of the braking momentum from said brake disc (1) to said hub (2),
(e) wherein at least one of said cams (15) on said hub (2) presents a collar (22) radially projecting to the outside, which locks said brake disc (1) placed onto said hub (2) in an axial direction towards one side, with said at least one collar (22) being integrally formed on the axial terminal sections of said cams (15),
**characterised in that**
(f) said brake disc is axially stepped on the inner periphery in such a way that a step (6') will be created for bearing against said collar (22),
(g) and said cams (15) on said hub are provided with air passages (16) that extend axially from the axial outer sides of said cams (15) and open into a clearance (10) of said brake disc (1).

2. Brake disc unit according to Claim 1, **characterised in that** the axial fixing of said brake disc towards that side of the brake disc, which is opposite to said collar (22), is realised by means of a retaining element (3) that is adapted to be inserted into a groove (20) in said hub (2).

3. Brake disc unit according to Claim 2, **characterised in that** said retaining element (3) is an open ring adapted to be inserted into said groove (20), which ring projects in a radial direction out of said groove (20) to the outside.

4. Brake disc unit according to any of the preceding Claims, **characterised in that** said intermediate elements (3) have a clip-like and substantially U-shaped configuration.

5. Brake disc unit according to Claim 4, **characterised in that** said intermediate elements comprise a main leg (23) as well as two longitudinal legs (24, 25) orthogonal thereon, which main leg is subdivided into several parts whereof a first part of said main leg (23) interconnects said two longitudinal legs (24, 25) of said U-shaped configuration, with two further parts being bent through 180° to the outside relative to said first part.

6. Brake disc unit according to any of the preceding Claims, **characterised in that** said air passages (16) are configured as recesses extending at an inclination relative to the plane of the brake disc so that said cams (15) on the outer periphery form some kind of "U" having a main side radially enlarging towards the inside.

7. Brake disc unit according to any of the preceding Claims, **characterised in that** said intermediate elements have a U-shaped configuration.

## Revendications

1. Unité de disque de freinage ayant un moyeu de roue et/ou de disque de freinage à recevoir un disque de freinage (19) mono corps ou multiple, de préférence divisé, comprenant des anneaux de friction (5, 6), reliés, de préférence, moyennant des entretoises (7), dans lequel la connexion suivante disque/moyeu est formée afin de relier ledit disque de freinage (1) audit moyeu (2) :
(a) ledit disque de freinage (1) présente des éléments d'appui (8) à sa partie périphérique intérieure,
(b) ledit moyeu (2) est muni des mentonnets (15) à sa périphérie extérieure,
(c) des pièces intercalaires (3) sont disposées en sens radial entre ledit moyeu (2) et ledit disque de freinage (1), en étant distribuées en sens périphérique,
(d) lesdites pièces intercalaires (3) sont placées sur lesdits mentonnets (15) ou éléments d'appui (8) d'une telle manière, que les parties longitudinales font saillie dans des espaces (26), qui s'étendent entre lesdits mentonnets (15) et lesdits éléments d'appui (8) en sens périphérique afin d'assurer la transmission du couple de freinage à partir dudit disque de freinage (1) audit moyeu (2),
(e) dans lequel au moins un parmi lesdits mentonnets (15) audit moyeu (2) présente un collet (22) en saillie radiale vers l'extérieur, qui serre ledit disque de freinage (1) placé sur ledit moyeu (2) en sens axial vers un côté, audit au moins un collet (22) étant formé de manière intégrale sur les parties terminales axiales desdits mentonnets (15),
**caractérisée en ce**
(f) que ledit disque de freinage est formé à gradins en sens axial sur la périphérie intérieure d'une telle façon, qu'un gradin (6') soit créé pour l'appui contre ledit collet (22),
(g) et en ce que lesdits mentonnets (15) audit moyeu sont munis des passages d'air (16), qui s'étendent en sens axial à partir des côtés axialement extérieurs desdits mentonnets (15) et s'ouvrent dans un jeu (10) dudit disque de freinage (1).

2. Unité de disque de freinage selon la revendication 1, **caractérisée en ce que** le fixage axial dudit disque de freinage vers ce côté du disque de freinage, qui est opposé audit collet (22), se fait moyennant un élément de retenue (3) apte à être introduit dans une rainure (20) dans ledit moyeu (2).

3. Unité de disque de freinage selon la revendication 2, **caractérisée en ce que** ledit élément de retenue (3) est une bague ouverte apte à être insérée dans ladite rainure (20), qui fait saillie en sens radial en dehors de ladite rainure (20) vers l'extérieur.

4. Unité de disque de freinage selon une quelconque des revendications précédentes, **caractérisée en ce que** lesdites pièces intercalaires (3) ont une configuration essentiellement en U, similaire à une agrafe.

5. Unité de disque de freinage selon la revendication 4, **caractérisée en ce que** lesdites pièces intercalaires comprennent une branche principale (23) ainsi que deux branches longitudinales (24, 25) orthogonales sur elle, ladite branche principale étant divisée en plusieurs parties, dont une première partie de ladite branche principale (23) relie lesdites deux branches longitudinales (24, 25) de ladite configuration en U l'une à l'autre, à deux autres parties étant pliées par 180° vers l'extérieure, relativement à ladite première partie.

6. Unité de disque de freinage selon une quelconque des revendications précédentes, **caractérisée en ce que** des passages d'air (16) sont formés en tant que des évidements, qui s'étendent à une inclinaison relative au plan du disque de freinage d'une telle manière, que lesdits mentonnets (15) à la périphérie extérieure créent une forme similaire à un « U » à un côté principal, qui s'élargit en sens radial vers l'intérieur.

7. Unité de disque de freinage selon une quelconque des revendications précédentes, **caractérisée en ce que** lesdites pièces intercalaires ont une configuration en U.
